# EUROPÄISCHE PATENTSCHRIFT

(11) **EP 4 309 146 B1**
(45) Veröffentlichungstag und Bekanntmachung des Hinweises auf die Patenterteilung: **07.10.2026**
(21) Anmeldenummer: 22714787.3
(22) Anmeldetag: 14.03.2022
(51) Int. Cl.: G06V 20/52, G06V 20/64, G06V 10/82

(54) **VERFAHREN FÜR EINE ÜBERPRÜFUNG VON GEPÄCKSTÜCKEN ZUR ERKENNUNG VON OBJEKTEN**
METHOD FOR INSPECTING ITEMS OF LUGGAGE IN ORDER TO DETECT OBJECTS
PROCÉDÉ PERMETTANT D'INSPECTER DES BAGAGES AFIN DE DÉTECTER DES OBJETS

(30) Priorität: 15.03.2021 DE 102021202512
(43) Veröffentlichungstag der Anmeldung: 24.01.2024
(73) Patentinhaber: Smiths Detection Germany GmbH, 65205 Wiesbaden (DE)
(72) Erfinder: RAZAVI, Seyed Mohammad, 65191 Wiesbaden (DE); HEILMANN, Geert, 65207 Wiesbaden (DE); MÜNSTER, Matthias, 65189 Wiesbaden (DE); MÜLLER, Klaus-Dieter, 65189 Wiesbaden (DE)
(74) Vertreter: Mathys & Squire
(86) Internationale Anmeldenummer: PCT/EP2022/056468
(87) Internationale Veröffentlichungsnummer: WO 2022/194744

(56) Entgegenhaltungen:
- US-A1- 2014 185 923
- PETROZZIELLO ALESSIO ET AL: "Automated Deep Learning for Threat Detection in Luggage from X-Ray Images", 1 January 2019, COMPUTER VISION - ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], PAGE(S) 505 - 512, ISBN: 978-3-030-58594-5, XP047527130
- "Multi-view object detection in dual-energy X-ray images", MACHINE VISION AND APPLICATIONS., vol. 26, no. 7-8, 4 August 2015 (2015-08-04), DE, pages 1045 - 1060, XP055729162, ISSN: 0932-8092, DOI: 10.1007/s00138-015-0706-x

## Beschreibung

Die vorliegende Erfindung betrifft ein Verfahren für eine Überprüfung von Gepäckstücken zur Erkennung von Objekten, eine Kontrollvorrichtung für die Durchführung eines solchen Verfahrens sowie ein Computerprogrammprodukt für die Veranlassung der Schritte eines erfindungsgemäßen Verfahrens.

Es ist bekannt, dass in sicherheitssensiblen Bereichen Gepäckstücke auf verbotene Objekte zu überprüfen. Dabei geht es insbesondere darum, in Gepäckstücken enthaltene Alarmobjekte als gefährliche Objekte mit möglichst hoher Sicherheit und möglichst geringer Fehlerrate zu identifizieren. Bekannte Lösungen setzten hierbei zum Beispiel auf das Durchleuchten von Gepäckstücken mit Kontrollvorrichtungen, zum Beispiel mit elektromagnetischer Strahlung. Dabei ist es bereits bekannt, dass zweidimensionale Bilder von Gepäckstücken erzeugt werden, welche das Ergebnis einer elektromagnetischen Bestrahlung sind. Aus der Absorptionsrate des Gepäckstücks kann ein Rückschluss gezogen werden auf die Art, die Form und/oder das Material des enthaltenen Objekts. Diese Auswertung kann insbesondere auch automatisiert durchgeführt werden, sodass es möglich ist neuronale Netzwerke als künstliche Intelligenz einzusetzen.

US 2014/185923 A1 offenbart eine automatische Erkennung von verdächtigen Objekten durch Radiographie und insbesondere ein Verfahren zur Extraktion eines Formmerkmals eines Objekts in einem Computertomographiesystem (CT).

Nachteilhaft bei den bekannten Lösungen ist es, dass diese sich auf zweidimensionale Wiedergaben in Form von Überwachungsbildern reduzieren. Insbesondere ist eine Anwendung eines neuronalen Netzwerks auf ein dreidimensionales Überprüfungsvolumen bisher nicht möglich. Dies beruht zum einen darauf, dass für die Anwendung eines neuronalen Netzwerks bei dreidimensionalem Überprüfungsvolumen ein sehr hoher Rechenaufwand und dementsprechend ein hoher Kosten- und Zeitaufwand notwendig wäre. Darüber hinaus ist es bisher nicht möglich eine ausreichend hohe Zahl an dreidimensionalen Trainingsdaten zur Verfügung zu stellen, um die dreidimensionale Auswertung von dreidimensionalem Überprüfungsvolumen mit einem entsprechen trainierten neuronalen Netzwerk überhaupt zu ermöglichen.

Es ist Aufgabe der vorliegenden Erfindung, die voranstehenden Nachteile zumindest teilweise zu beheben. Insbesondere ist es Aufgabe der vorliegenden Erfindung, in kostengünstiger und einfacher Weise die Erkennung von Objekten bei der Überprüfung von Gepäckstücken zu verbessern und/oder zu vereinfachen.

Die voranstehende Aufgabe wird gelöst durch ein Verfahren mit den Merkmalen des Anspruchs 1, eine Kontrollvorrichtung mit den Merkmalen des Anspruchs 14 und ein Computerprogramm mit den Merkmalen des Anspruchs 17. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Kontrollvorrichtung sowie dem erfindungsgemäßen Computerprogrammprodukt und jeweils umgekehrt, sodass bezüglich der Offenbarung zu den einzelnen Erfindungsaspekten stets wechselseitig Bezug genommen wird beziehungsweise werden kann.

Erfindungsgemäß dient ein Verfahren einer Überprüfung von Gepäckstücken zur Erkennung von Objekten. Ein solches Verfahren weist die folgenden Schritte auf:
- Erzeugen eines dreidimensionalen Überprüfungsvolumens,
- Erzeugen eines zweidimensionalen ersten Überprüfungsbildes aus dem dreidimensionalen Überprüfungsvolumen entlang einer ersten Projektionsrichtung,
- Erzeugen wenigstens eines zweidimensionalen zweiten Überprüfungsbildes aus dem dreidimensionalen Überprüfungsvolumen entlang einer zweiten Projektionsrichtung, welche sich von der ersten Projektionsrichtung unterscheidet,
- Auswerten des ersten Überprüfungsbildes zur Erkennung von Objekten mittels eines neuronalen Netzwerks,
- Auswerten des wenigstens einen zweiten Überprüfungsbildes zur Erkennung von Objekten mittels eines neuronalen Netzwerkes,
- Ausgeben des Ergebnisses der Auswertungsschritte.

Ein erfindungsgemäßes Verfahren basiert darauf, dass ein dreidimensionales Überprüfungsvolumen erzeugt wird. Ein solches dreidimensionales Überprüfungsvolumen kann dabei das Ergebnis von entsprechenden Erfassungsmodulen sein. Dabei ist es für den grundlegenden Kerngedanken der vorliegenden Erfindung unerheblich, in welcher Weise das dreidimensionale Überprüfungsvolumen erzeugt wird. Beispielsweise kann ein scheibenweises Zusammensetzen des Überprüfungsvolumens zur Verfügung gestellt werden. Auch ist es denkbar, dass aus einzelnen Überprüfungsaufnahmen, insbesondere zweidimensionalen Überprüfungsaufnahmen, das dreidimensionale Überprüfungsvolumen zusammengesetzt wird. Darüber hinaus ist darauf hinzuweisen, dass das dreidimensionale Überprüfungsvolumen sowohl durch den Einsatz von Algorithmen aus zweidimensionalen Überprüfungsausnahmen generiert werden kann als auch direkt durch eine dreidimensionale Erfassung erzeugbar ist. Auch eine Kombination einer algorithmischen Ausbildung mit einer dreidimensionalen Erzeugung ist selbstverständlich im Rahmen der vorliegenden Erfindung denkbar.

Ein Kerngedanke der vorliegenden Erfindung liegt darin, dass das dreidimensionale Überprüfungsvolumen nicht direkt der weiteren Untersuchung zugrunde gelegt wird. Vielmehr erfolgen zumindest zwei weitere Bearbeitungsschritte für das dreidimensionale Überprüfungsvolumen, um aus einem dreidimensionalen Volumen jeweils ein zweidimensionales Überprüfungsbild zu erzeugen. Die Erzeugung der jeweiligen Überprüfungsbilder wird dabei entlang einer Projektionsrichtung durchgeführt.

Stellt man sich beispielsweise ein dreidimensionales Überprüfungsvolumen als ein quaderförmiges Volumen vor, so kann beispielsweise im 90° Winkel zu einer Seitenfläche dieses Würfels eine erste Projektionsrichtung ausgerichtet sein. Entlang dieser Projektionsrichtung werden nun die Parameter und Informationen aus dem dreidimensionalen Überprüfungsvolumen auf ein zweidimensionales erstes Überprüfungsbild projiziert. Mit anderen Worten wird aus dem dreidimensionalen Überprüfungsvolumen durch Reduktion der Daten der einzelnen Voxel in gezielter Weise entlang einer Projektionsrichtung ein zweidimensionales Überprüfungsbild mit entsprechenden einzelnen Pixeln erzeugt. Dies wird zumindest zweimal durchgeführt, nämlich einmal entlang der ersten Projektionsrichtung zur Erzeugung des ersten Überprüfungsbildes und wenigstens ein weiteres Mal zur Erzeugung wenigstens eines zweidimensionalen zweiten Überprüfungsbildes entlang der zweiten Projektionsrichtung. Entscheidend ist dabei, dass sich die beiden Projektionsrichtungen voneinander unterscheiden. Mit anderen Worten wird aus einem dreidimensionalen Überprüfungsbild eine Erzeugung von wenigstens zwei zweidimensionalen Überprüfungsbildern durchgeführt. Dadurch, dass für jedes Überprüfungsbild eine spezifische Projektionsrichtung ausgewählt wird, welche sich von den Projektionsrichtungen der anderen Überprüfungsbilder unterscheidet, sehen die zweidimensionalen Überprüfungsbilder auch unterschiedlich aus. Die Reduktion der Daten vom dreidimensionalen Überprüfungsvolumen auf das jeweilige Überprüfungsbild unterscheidet sich damit, sodass in der Kombination mehrere Überprüfungsbilder entlang unterschiedlicher Projektionsrichtungen wieder einen vergrößerten Informationsgehalt haben.

Es ist dabei darauf hinzuweisen, dass selbstverständlich auch zwei, drei oder mehr zweite Überprüfungsbilder erzeugt werden können. Beispielsweise sind in Summe das Erzeugen von drei, vier oder beliebig vielen Überprüfungsbildern möglich, wobei alle Überprüfungsbilder entlang einer eigenen und spezifischen Projektionsrichtung erzeugt werden. Mit anderen Worten unterscheiden sich insbesondere alle Projektionsrichtungen voneinander und sind damit bezüglich des Durchlaufs des Verfahrens einzigartig.

Wie aus der voranstehenden Erläuterung ersichtlich wird, kann nun eine Datenreduktion aus dem dreidimensionalen Überprüfungsvolumen auf das zweidimensionale Überprüfungsbild erfolgen. Dadurch wird es möglich, bereits bekannte und vorhandene neuronale Netzwerke einzusetzen, um das jeweilige zweidimensionale Überprüfungsbild in bekannter Weise in zweidimensionaler Art auszuwerten. Ein solches neuronales Netzwerk wird dabei vorzugsweise für beide, insbesondere für alle zweidimensionalen, Überprüfungsbilder für die Auswertung eingesetzt. In einem abschließenden Schritt kann nun das Ergebnis dieser Auswertungsschritte ausgegeben werden. Dabei ist es in einem ersten Schritt unerheblich wie und in welcher Art und Weise diese Ausgabe erfolgt. Beispielsweise ist eine optische Ausgabe der einzelnen Überprüfungsbilder, insbesondere mit einer Markierung von Objekten, beispielsweise mit einer Markierung von Alarmobjekten, möglich. Auch ist es denkbar, dass das Ergebnis direkt in Form eines Alarms oder in Form einer Unterdrückung eines Alarms ausgegeben wird. Selbstverständlich kann, wie dies später noch erläutert wird, für jedes der Überprüfungsbilder ein einzelnes Auswertungsergebnis erzeugt werden, während grundsätzlich auch die Ausgabe eines gemeinsamen Auswertungsergebnisses denkbar ist.

Auf Basis der voranstehenden Erläuterung wird ersichtlich, dass in einem ersten erfindungsgemäßen Schritt ein dreidimensionales Volumen mit einem hohen Informationsgehalt erzeugt werden kann. In einem dreidimensionalen Volumen werden für eine Vielzahl von einzelnen Voxeln (dreidimensionale Pixel) Informationen über das Gepäckstück und Objekte innerhalb des Gepäckstücks ermittelt. Um die Auswertung in kostengünstiger, einfacher und, auch bezogen auf die Rechenzeit, schneller zur Verfügung zu stellen, wird erfindungsgemäß die Umformung dieses hohen Informationsgehaltes in einen reduzierten Informationsgehalt in Form der zweidimensionalen Überprüfungsbilder durchgeführt. Dadurch, dass jedoch zumindest zwei oder sogar mehrere unterschiedliche zweidimensionale Überwachungsbilder zur Verfügung gestellt werden, bleibt in Summe ein höherer Informationsgehalt für das Auswertungsergebnis beziehungsweise für das Auswerten mit Hilfe der neuronalen Netzwerke übrig als dies bei der Auswertung von einem einzigen zweidimensionalen Überwachungsbild der Fall ist.

Es ist also mit einem erfindungsgemäßen Verfahren möglich, in kostengünstiger und einfacher Weise bekannte neuronale Netzwerke zu verwenden, welche entsprechend auch einfach und kostengünstig aufgrund vorhandener Trainingsdaten trainiert werden können. Gleichzeitig wird auf Basis eines hohen Informationsgehaltes eines dreidimensionalen Überprüfungsbild eine schnelle Auswertung, insbesondere mit einer geringen Fehlerrate, möglich. Besonders bevorzugt kann dieses Verfahren computerimplementiert ausgebildet sein.

Es kann Vorteile mit sich bringen, wenn bei einem erfindungsgemäßen Verfahren die Erzeugung des dreidimensionalen Überprüfungsvolumens auf Basis einer Vielzahl von zweidimensionalen Überprüfungsaufnahmen erzeugt wird. Mit anderen Worten kann hier eine zweidimensionale Aufnahme zur Verfügung gestellt werden, welche zum Beispiel durch mathematische Algorithmen in ein dreidimensionales Überprüfungsvolumen umgerechnet werden kann. Beispielsweise ist es möglich, dass die Quelle elektromagnetischer Strahlung und ein entsprechender Liniendetektor um ein Gepäckstück herum rotiert und auf diese Weise aus unterschiedlichen Richtungen zweidimensionale Überprüfungsaufnahmen erzeugt. Anschließend werden durch mathematische Algorithmen diese zweidimensionalen Überprüfungsaufnahmen zu einem dreidimensionalen Überprüfungsvolumen zusammengesetzt. Mit anderen Worten erfolgt eine Extrapolation der zweidimensionalen Überprüfungsaufnahmen zum dreidimensionalen Überprüfungsvolumen. Dabei handelt es sich um eine besonders einfache und kostengünstige Möglichkeit, um ein dreidimensionales Überprüfungsvolumen mit entsprechend hohem Informationsgehalt zu erzeugen.

Vorteile bringt es weiter mit sich, wenn bei einem erfindungsgemäßen Verfahren das Ergebnis der Auswertung des ersten Überprüfungsbildes und das Ergebnis der Auswertung des zweiten Überprüfungsbildes zu einem gemeinsamen Überprüfungsergebnis kombiniert wird. Dies ist insbesondere dann sinnvoll, wenn die Auswertungen der unterschiedlichen Überprüfungsbilder unterschiedliche Ergebnisse haben und auf diese Weise sozusagen das Auswertungsergebnis des ersten Überprüfungsbildes durch die Auswertung eines zweiten Überprüfungsbildes verifiziert und/oder bestätigt werden kann. Dabei kann es sich zum Beispiel um die Ausgabe eines gemeinsamen Alarmsignals handeln. Jedoch ist es auch denkbar, dass die Auswertungsergebnisse in optischer Weise beziehungsweise in visueller Weise kombiniert werden, um dem Bedienpersonal einer Kontrollvorrichtung angezeigt zu werden. So können beispielsweise optische Markierungen innerhalb eines als Ausgabeergebnis ausgestalteten Bildes ein Objekt andeuten, markieren oder hinsichtlich seiner Gefährlichkeit hervorheben. Insbesondere erfolgt dieser Schritt des Erzeugens eines gemeinsamen Überprüfungsergebnisses in einer automatischen Auswertroutine.

Vorteile kann es mit sich bringen, wenn bei einem erfindungsgemäßen Verfahren auf Basis des dreidimensionalen Überprüfungsvolumens wenigstens eine Zusatzinformation, insbesondere eine Information über eine Materialdichte eines Objekts, ausgewertet wird. Die Kombination der Dichteinformationen mit den Informationen aus den beiden Projektionen erlaubt es den Informationsgehalt des Auswerteergebnisses noch weiter zu erhöhen. So kann die Dichteinformation zum Beispiel am Ausgangsergebnis beziehungsweise am Überprüfungsergebnis zusätzlich optisch angezeigt werden. Jedoch ist es auch denkbar, dass diese Zusatzinformation, zum Beispiel in Form der Materialdichte, bereits vor dem Eingang in die neuronalen Netzwerke eingesetzt wird und diese als Zusatzinformation mit durchläuft. Die Verwendung von wenigstens einer Zusatzinformation erlaubt es ein erfindungsgemäßes Verfahren noch zielgenauer, schneller und mit einer geringen Fehlerrate durchzuführen.

Vorteilhaft ist es weiter, wenn bei einem erfindungsgemäßen Verfahren für die Auswertung der zweidimensionalen Überprüfungsbilder identische neuronale Netzwerke, insbesondere das gleiche neuronale Netzwerk verwendet wird. Somit ist nur ein einziges neuronales Netzwerk zu trainieren und entsprechend einzusetzen. Wird das neuronale Netzwerk in Form eines neuronalen Computerchips eingesetzt, so kann sequenziell eine Auswertung der zweidimensionalen Überprüfungsbilder sogar auf dem identischen neuronalen Chip durch das identische neuronale Netzwerk zur Verfügung gestellt werden. Dadurch, dass erfindungsgemäß keine dreidimensionale Auswertung, sondern vielmehr eine schnelle Auswertung zweidimensionaler Überprüfungsbilder erfolgen soll, kann dies auch sequentiell schnell genug für die gewünschte Auswertung zur Verfügung gestellt werden.

Vorteile bringt es weiter mit sich, wenn bei einem erfindungsgemäßen Verfahren als zweidimensionale Überprüfungsbilder Material-Luminiszenz-Bilder erzeugt werden. Dabei beschreiben die einzelnen Farben eines solchen Material-Luminiszenz-Bildes die Materialinformation. So kann ein Hinweis gegeben werden, ob es sich um metallische Materialien, organische Materialien oder Ähnliches handelt. Über die Luminiszenz im Bild, also die Helligkeit des jeweiligen Materials, ist eine Dickeinformation darstellbar. Diese Material-Luminiszenz-Bilder können entsprechend optische Ausgangspositionen für das nachfolgende neuronale Netzwerk bieten. Insbesondere wird auch das Ausgabeergebnis in Form von Material-Luminiszenz-Bildern erzeugt, wobei die Ergebnisinformation beispielsweise in Form einer Markierung in die Material-Luminiszenz-Bilder hineinprojiziert und/oder mit diesen kombiniert werden kann.

Vorteile bringt es weiter mit sich, wenn bei einem erfindungsgemäßen Verfahren die Ausrichtung der ersten Projektionsrichtung und/oder der zweiten Projektionsrichtung einstellbar ist. Wie bereits erläutert worden ist, kann durch die Auswahl unterschiedlicher Projektionsrichtungen die Datenmenge und der Informationsgehalt aus dem dreidimensionalen Überprüfungsvolumen in unterschiedlicher Weise reduziert werden. Je nach tatsächlicher Einsatzsituation, tatsächlichem Gepäckstück und/oder tatsächlich gesuchtem Objekt, können unterschiedliche Projektionsrichtungen besser oder schlechter sein. So kann beispielsweise bei einer schlechten Erkennbarkeit eines Objekts ein manuelles Nachjustieren oder Einstellen der Projektionsrichtung zu einem verbesserten Verfahrensdurchlauf führen. Selbstverständlich kann ein solches Einstellen der Projektionsrichtungen, aber auch der Anzahl der zweiten Überprüfungsbilder, in automatischer Weise erfolgen. So ist beispielsweise eine Anpassung der Projektionsrichtungen und der Anzahl der Überprüfungsbilder an unterschiedliche Überwachungsaufgaben möglich. Die Projektionsrichtungen können dabei zum Beispiel zueinander definierte Winkel, zum Beispiel 90° und/oder 45° aufweisen. Dabei kann selbstverständlich für die Variation der Projektionsrichtungen deren relative Ausrichtung zueinander und/oder deren absolute Ausrichtung in einem ortsfesten Koordinatensystem verwendet werden.

Vorteile bringt es darüber hinaus mit sich, wenn bei einem erfindungsgemäßen Verfahren die Anzahl der Erzeugung der zweiten zweidimensionalen Überprüfungsbilder einstellbar ist. Wie bereits im voranstehenden Absatz erläutert worden ist, kann dies manuell, aber auch in automatischer Weise, vorgegeben durch das System, erfolgen. Bevorzugt sind drei, vier oder sogar noch mehr Überprüfungsbilder. Entscheidend dabei ist, dass jede Projektionsrichtung für ein Überprüfungsbild nur ein einziges Mal verwendet wird, da ansonsten durch die identische Projektionsrichtung ein Duplikat eines bereits existierenden Überprüfungsbildes erzeugt werden würde, sodass ein höherer Rechenaufwand in der Auswertung ohne zusätzliche Informationen in der Auswertung zur Verfügung gestellt werden würde.

Vorteile kann es weiter mit sich bringen, wenn bei einem erfindungsgemäßen Verfahren die Schritte des Erzeugens der zweidimensionalen Überprüfungsbilder und der Auswertung der erzeugten zweidimensionalen Überprüfungsbilder wenigstens einmal wiederholt werden, wobei wenigstens eine der Projektionsrichtungen für die Wiederholung verändert wird. Dabei handelt es ich um wenigstens eine Iterationsschleife, um das Ergebnis zu verbessern. Dabei ist weiter darauf hinzuweisen, dass insbesondere auf das gleiche Ausgangs-Überprüfungsvolumen zurückgegriffen wird, also nicht eine nochmalige Erzeugung des dreidimensionalen Überprüfungsvolumens notwendig wird. Vielmehr kann diese Verfahrensiteration beispielsweise ausschließlich bei der Auswertung des bereits erzeugten dreidimensionalen Überprüfungsvolumens zur Verfügung gestellt werden. Ist beispielsweise beim Auswertergebnis nicht die gewünschte Eindeutigkeit gegeben, so kann eine weitere Iteration mit unterschiedlichen Projektionsrichtungen eine Verifizierung eines ungenauen Ergebnisses erlauben. Darüber hinaus kann auf diese Weise die Erkennungsgenauigkeit verbessert und in gleichem Maße das Auftreten von Fehlalarmierungen deutlich reduziert werden. Insbesondere, wenn ein Objekt mit einer gewissen Wahrscheinlichkeit als verbotenes Objekt (Prohibited Object) erkannt wird, kann mit einer anderen Projektionsrichtung diese Alarmierung abgesichert werden. Dies kann sowohl automatisch oder wie bereits erläutert, in manueller Weise, erfolgen.

Bei einer Ausführungsform gemäß dem voranstehenden Absatz kann es Vorteile mit sich bringen, wenn bei dem Verfahren ein Zusammenhang zwischen den Ergebnissen der Auswertung und der durchgeführten Veränderung der wenigstens einen Projektionsrichtung für zukünftige Auswertungen und/oder Veränderungen gespeichert wird. Mit anderen Worten kann auf diese Weise ein lernfähiges System in der Optimierung der Iterationsschleifen zur Verfügung gestellt werden. So kann beispielsweise bei einer regelmäßigen Iteration mit geänderten Projektionsrichtungen die Ausgangsprojektionsrichtung für das jeweilige Überprüfungsbild bereits angepasst werden, sodass in der Zukunft bereits im ersten Durchlauf ein verbessertes Auswertungsergebnis beziehungsweise Überprüfungsergebnis erzielt werden kann. Auch kann bei uneindeutigen Überprüfungsergebnissen in Zukunft eine geringere Anzahl von Iterationen notwendig sein, da bekannt ist, welche Variation welcher Projektionsrichtung den gewünschten positiven Effekt auf das Überprüfungsergebnis mit sich bringt.

Vorteilhaft ist es weiter, wenn bei einem erfindungsgemäßen Verfahren das dreidimensionale Überprüfungsvolumen scheibenweise aufgebaut wird. Dabei handelt es sich um eine besonders einfache und kostengünstige Erzeugung eines dreidimensionalen Überprüfungsvolumens. Das Zusammensetzen der einzelnen Scheibenvolumina kann zum Beispiel durch ein scheibenweises Erkennen mit einem Erfassungsmodul erfolgen. So kann beispielsweise ein rotierender Strahlungsgenerator mit einem entsprechenden mitrotierenden Liniendetektor diese einzelnen Scheiben als Basis für das dreidimensionale Überprüfungsvolumen zur Verfügung stellen. Dabei kann die Erkennung bereits dreidimensional oder noch zweidimensional erfolgen.

Vorteile bringt es darüber hinaus mit sich, wenn bei einem erfindungsgemäßen Verfahren bei der Erzeugung des dreidimensionalen Überprüfungsvolumens, insbesondere auf Basis einer Vielzahl von zweidimensionalen Überprüfungsaufnahmen, die Erzeugung mit wenigstens zwei unterschiedlichen Energieniveaus durchgeführt wird. Ein solches, auch als Dual-Energy bezeichnetes, Verfahren führt zu einer weiter verbesserten Erkennung und insbesondere einer Unterscheidungsmöglichkeit unterschiedlicher Materialien, deren Absorptionsverhalten über unterschiedliche Energieniveaus zueinander nicht linear ist.

Vorteile kann es darüber hinaus mit sich bringen, wenn bei einem erfindungsgemäßen Verfahren als Ergebnis der Überwachung ein Alarm ausgegeben wird, wenn wenigstens ein Alarmobjekt als Objekt erkannt worden ist. Eine solche automatische Erkennung und auf diese Weise Unterscheidung zwischen harmlosen Objekten und Alarmobjekten führt zu einer automatischen Alarmmöglichkeit, welche dann zusätzlich oder alternativ zu einem menschlichen Operator eingesetzt werden kann. Bei einem erkannten Alarmobjekt kann also ein Alarm ausgegeben werden und eine Kontrolle durch einen Operator in manueller Weise durchgeführt werden. Wird ein Alarm unterdrückt, also kein Alarm ausgegeben, so kann ein entsprechendes Gepäckstück im Ergebnis durch ein erfindungsgemäßes Verfahren als harmlos freigegeben werden.

Ebenfalls Gegenstand der vorliegenden Erfindung ist eine Kontrollvorrichtung für die Durchführung eines Verfahrens gemäß der vorliegenden Erfindung. Eine solche Kontrollvorrichtung weist ein Volumen-Erzeugungsmodul zum Erzeugen eines dreidimensionalen Überprüfungsvolumens auf. Weiter ist die Kontrollvorrichtung mit einem Bild-Erzeugungsmodul zum Erzeugen eines zweidimensionalen ersten Überprüfungsbildes aus dem dreidimensionalen Überprüfungsvolumen entlang einer ersten Projektionsrichtung und zum Erzeugen wenigstens eines zweidimensionalen zweiten Überprüfungsbildes aus dem dreidimensionalen Überprüfungsvolumen entlang einer zweiten Projektionsrichtung ausgestattet. Die erste Projektionsrichtung unterscheidet sich dabei von der zweiten Projektionsrichtung. Weiter ist ein Auswertemodul vorgesehen zum Auswerten des ersten Überprüfungsbildes zur Erkennung von Objekten mittels eines neuronalen Netzwerks und zum Auswerten des wenigstens einen zweiten Überprüfungsbildes zur Erkennung von Objekten mittels eines neuronalen Netzwerkes. Mit Hilfe eines Ausgabemoduls erfolgt die Ausgabe des Ergebnisses der Auswertungsschritte. Damit bringt eine erfindungsgemäße Kontrollvorrichtung die gleichen Vorteile mit sich, wie sie ausführlich mit Bezug auf ein erfindungsgemäßes Verfahren erläutert worden sind.

Vorteilhaft kann es sein, wenn bei einer erfindungsgemäßen Kontrollvorrichtung das Volumen-Erzeugungsmodul, das Bild-Erzeugungsmodul, das Auswertemodul und/oder das Ausgabemodul für die Durchführung eines erfindungsgemäßen Verfahrens ausgebildet sind.

Weitere Vorteile bringt es mit sich, wenn bei einer erfindungsgemäßen Kontrollvorrichtung ein Erfassungsmodul zum Erfassen von Eingangsdaten, insbesondere in Form von zweidimensionalen Überwachungsaufnahmen, vorgesehen ist. Somit ist es möglich, zum Beispiel mit einer Strahlungsquelle und einem zugehörigen Strahlungsdetektor scheibenweise und/oder in zweidimensionaler Weise die Überwachungsaufnahmen zu erzeugen, welche anschließend mathematisch in ein dreidimensionales Überprüfungsvolumen umgesetzt werden.

Ebenfalls Gegenstand der vorliegenden Erfindung ist ein Computerprogrammprodukt, umfassend Befehle, die bei der Ausführung des Programms durch einen Computer diesen veranlassen die Schritte eines erfindungsgemäßen Verfahrens durchzuführen. Damit bringt ein erfindungsgemäßes Computerprogrammprodukt die gleichen Vorteile mit sich, wie sie ausführlich mit Bezug auf ein erfindungsgemäßes Verfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Kontrollvorrichtung,
- Fig. 2: ein weiteres Detail einer erfindungsgemäßen Kontrollvorrichtung,
- Fig. 3: ein weiteres Detail einer erfindungsgemäßen Kontrollvorrichtung,
- Fig. 4: ein weiteres Detail einer erfindungsgemäßen Kontrollvorrichtung,
- Fig. 5: ein weiteres Detail einer erfindungsgemäßen Kontrollvorrichtung,
- Fig. 6: eine Ausführungsform zur Erzeugung eines dreidimensionalen Überprüfungsvolumens und
- Fig. 7: eine weitere Ausführungsform zur Erzeugung eines erfindungsgemäßen Überprüfungsvolumens.

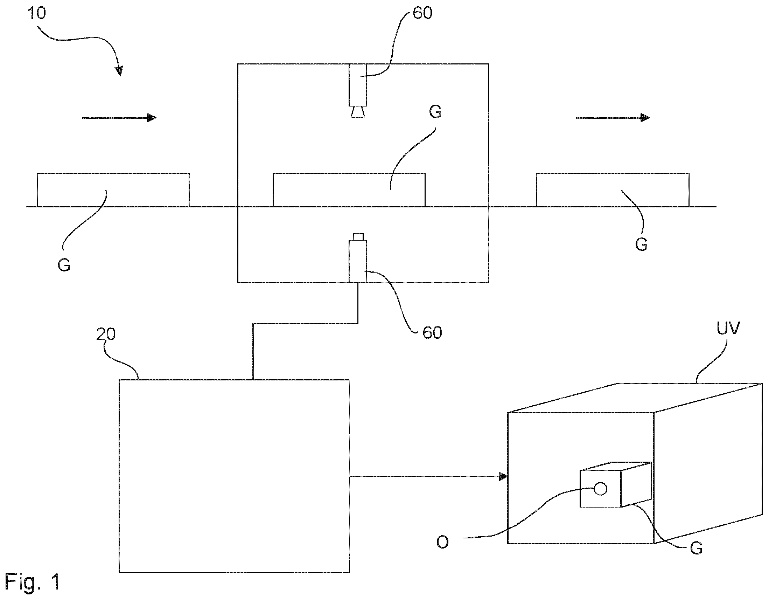

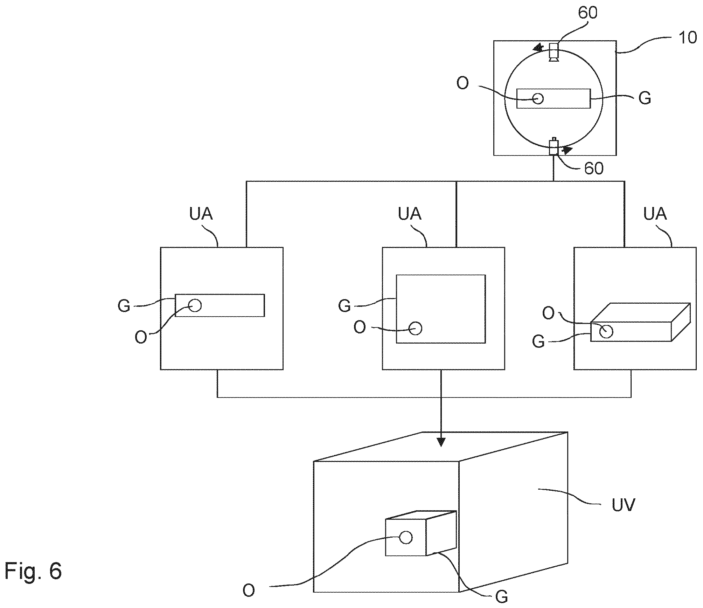

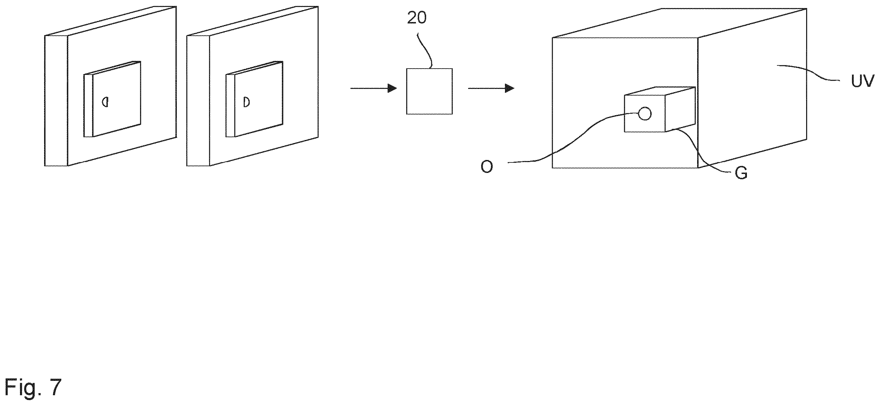

Figur 1 zeigt schematisch, wie auf einem Gepäckband einzelne Gepäckstücke G transportiert werden. Diese durchlaufen in der Kontrollvorrichtung 10 nun ein Volumen, in welchem hier ein Erfassungsmodul 60 in Form einer Strahlungsquelle und eines Strahlungsdetektors angeordnet sind. Wie später noch erläutert wird, kann die Kombination aus Strahlungsquelle und Strahlungsdetektor für das Erfassungsmodul 60 auch bewegbar, insbesondere rotierend, angeordnet sein. Bei dieser Ausführungsform der Kontrollvorrichtung 10 wird nun mit Hilfe eines Volumen-Erzeugungsmoduls 20 ein dreidimensionales Überprüfungsvolumen UV erzeugt. Diese Erzeugung wird später noch, insbesondere mit Bezug auf die Figuren 6 und 7, näher erläutert. Das Überprüfungsvolumen UV beinhaltet hier hohen Informationsgehalt hinsichtlich der einzelnen Voxel als Teil des Gepäckstücks G beziehungsweise als Teil des Objektes O innerhalb des Gepäckstücks G.

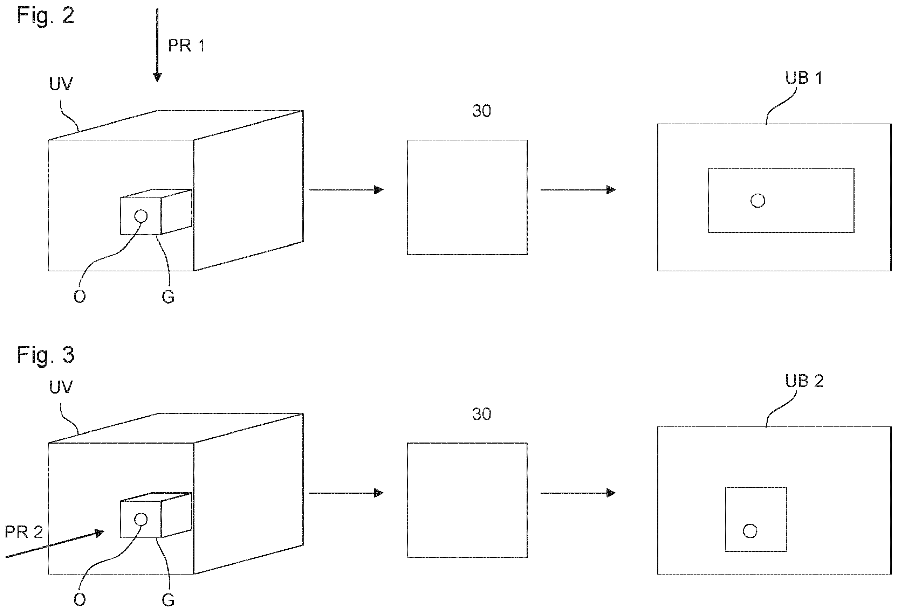

Um nun eine zumindest teilweise automatisierte Auswertung des Überprüfungsvolumens UV durchführen zu können, zeigen die Figuren 2 und 3 eine Reduktion des hohen Informationsgehaltes dieses Überprüfungsvolumens UV. Gemäß der Figur 2 wird nun von oben entlang einer ersten Projektionsrichtung PR1 über ein Bild-Erzeugungsmodul 30 ein erstes zweidimensionales Überprüfungsbild UB1 erzeugt. In im Wesentlichen gleicher Weise wird aus dem Überprüfungsvolumen UV in der Figur 3 entlang einer von der ersten Projektionsrichtung PR1 unterschiedlichen zweiten Projektionsrichtung PR2 über ein identisches oder separates Bild-Erzeugungsmodul 30 ein zweites Überprüfungsbild UB2 erzeugt. Wie aus der schematischen Darstellung der Figuren 2 und 3 zu erkennen ist, unterscheiden sich die beiden Überprüfungsbilder UB1 und UB2 voneinander, da sie entlang unterschiedlicher Projektionsrichtungen PR1 und PR2 erzeugt worden sind. In der Zusammenschau der beiden Überprüfungsbilder UB1 und UB2 ist also ein Mehr an Informationsgehalt gegeben als in einem einfachen zweidimensionalen Bild.

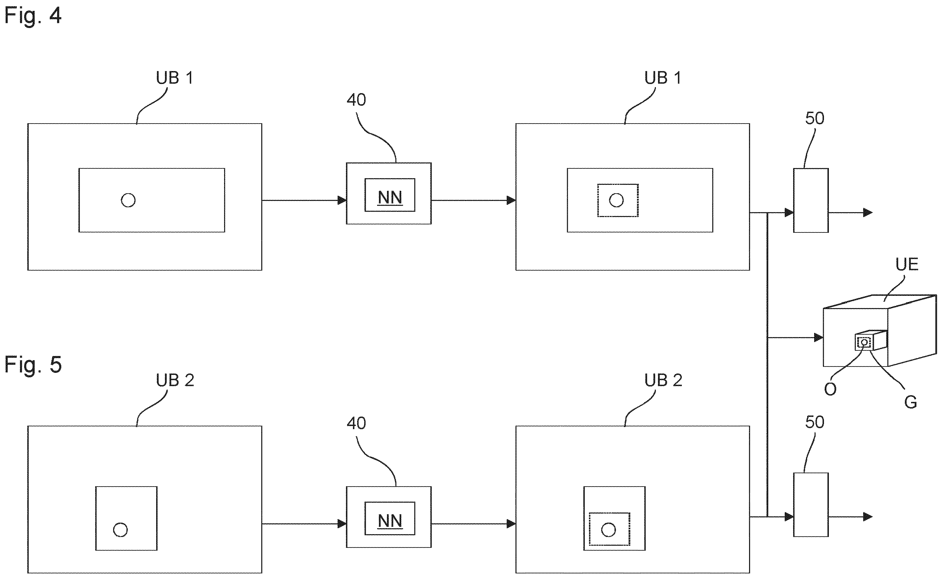

Für die automatisierte Auswertung der auf diese Weise erzeugten Überprüfungsbilder UB1 und UB2 wird gemäß der Figuren 4 und 5 nun ein neuronales Netz NN in einem Auswertemodul 40 eingesetzt. Dabei kann es sich insbesondere um das identische neuronale Netzwerk für die Auswertung aller Überprüfungsbilder UB1 und UB2 handeln. An dieser Stelle sei nochmals darauf hingewiesen, dass selbstverständlich auch zwei oder mehr zweite Überprüfungsbilder eingesetzt werden, sodass entsprechend die Durchführung der Verfahrensschritte der Figuren 3 und 5 entsprechend häufiger parallel durchgeführt werden kann.

Die Figur 4 und 5 zeigt im Ergebnis nach dem neuronalen Netzwerk NN des Auswertemoduls 40 ein Überprüfungsergebnis für jedes Überprüfungsbild UB1 und UB2, wobei hier die entsprechenden Objekte O mit einem Markierungsrahmen schematisch markiert worden sind. Diese können nun über ein entsprechendes Ausgabemodul 50, insbesondere automatisch, an einen Operator ausgegeben werden. Alternativ oder zusätzlich ist es auch denkbar, dass auf Basis der einzelnen zweidimensionalen Ergebnisse der Überprüfungsbilder UB1 und UB2 ein gemeinsames Überprüfungsergebnis UE erzeugt wird, welches insbesondere wieder eine dreidimensionale Erstreckung aufweisen kann, wie dies schematisch in den Figuren 4 und 5 dargestellt ist. Hier wurde die Markierung aus den einzelnen zweidimensionalen Überprüfungsbildern UB1 und UB2 in das dreidimensionale Überprüfungsvolumen UV und dort in das Gepäckstück G des gemeinsamen Überprüfungsergebnisses UE übernommen.

Figur 6 zeigt eine Möglichkeit in besonders kostengünstiger und einfacher Weise mit Hilfe des Volumen-Erzeugungsmoduls 20 das Überprüfungsvolumen UV zu erzeugen. Hier ist gut zu erkennen, dass das Erfassungsmodul 60 wieder aus einer Strahlungsquelle und einem Detektor besteht, welche um ein Gepäckstück G mit einem Objekt O in einer Kontrollvorrichtung 10 rotieren können. Durch die Rotation werden in unterschiedlichen Erfassungsrichtungen nun unterschiedliche Überprüfungsaufnahmen UA, hier bei der Figur 6 drei verschiedene, erzeugt. Je nach der Richtung der Erfassung sieht das Gepäckstück G und das Objekt O anders aus, was schematisch in der Figur 6 dargestellt ist. Anschließend wird nun in algorithmischer Weise eine Kombination der zweidimensionalen Überprüfungsaufnahme UA erfolgen, um ein Zusammensetzen in ein dreidimensionales Überprüfungsvolumen UV zu ermöglichen. Auf diese Weise erzeugte Überprüfungsvolumen UV können beispielsweise die Basis für ein erfindungsgemäßes Verfahren bilden.

Zusätzlich oder alternativ ist es auch denkbar, dass gemäß der Figur 7 ein scheibenweises Zusammensetzen des Überprüfungsvolumens UV erfolgt. Somit werden einzelne Volumenscheiben aufgenommen und anschließend mit Hilfe des Volumen-Erzeugungsmoduls 20 zusammengesetzt. Auch hier steht im Ergebnis ein dreidimensionales Überprüfungsvolumen UV, welches die Basis für ein erfindungsgemäßes Verfahren bilden kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden.

### Bezugszeichenliste

- 10: Kontrollvorrichtung
- 20: Volumen-Erzeugungsmodul
- 30: Bild-Erzeugungsmodul
- 40: Auswertemodul
- 50: Ausgabemodul
- 60: Erfassungsmodul

- UA: Überprüfungsaufnahme
- PR2: zweite Projektionsrichtung
- PR1: erste Projektionsrichtung
- UB1: erstes Überprüfungsbild
- UB2: zweites Überprüfungsbild
- UV: Überprüfungsvolumen
- UE: gemeinsames Überprüfungsergebnis
- NN: neuronales Netzwerk

- G: Gepäckstück
- O: Objekt

## Patentansprüche

1. Verfahren für eine Überprüfung von Gepäckstücken (G) zur Erkennung von Objekten (O), aufweisend die folgenden Schritte:
- Erzeugen eines dreidimensionalen Überprüfungsvolumens (UV), welches eine Vielzahl von Voxel mit Informationen zu einem Gepäckstück (G) und darin befindlichen Objekten (O) aufweist,
- Erzeugen eines zweidimensionalen ersten Überprüfungsbildes (UB1) aus dem dreidimensionalen Überprüfungsvolumen (UV) entlang einer ersten Projektionsrichtung (PR1),
- Erzeugen wenigstens eines zweidimensionalen zweiten Überprüfungsbildes (UB2) aus dem dreidimensionalen Überprüfungsvolumen (UV) entlang einer zweiten Projektionsrichtung (PR2), welche sich von der ersten Projektionsrichtung (PR1) unterscheidet,
- Auswerten des ersten Überprüfungsbildes (UB1) zur Erkennung von Objekten (O) mittels eines neuronalen Netzwerks (NN),
- Auswerten des wenigstens einen zweiten Überprüfungsbildes (UB) zur Erkennung von Objekten (O) mittels eines neuronalen Netzwerks (NN),
- Ausgeben des Ergebnisses der Auswertungsschritte.

2. Verfahren nach Anspruch 1, **dadurch gekennzeichnet, dass** die Erzeugung des dreidimensionalen Überprüfungsvolumens (UV) auf Basis einer Vielzahl von zweidimensionalen Überprüfungsaufnahmen (UA) erzeugt wird.

3. Verfahren nach einem der vorangegangenen Ansprüche, **dadurch gekennzeichnet, dass** das Ergebnis der Auswertung des ersten Überprüfungsbildes (UB1) und das Ergebnis der Auswertung des zweiten Überprüfungsbildes (UB2) zu einem gemeinsamen Überprüfungsergebnis (UE) kombiniert werden.

4. Verfahren nach einem der vorangegangenen Ansprüche, **dadurch gekennzeichnet, dass** auf Basis des dreidimensionalen Überprüfungsvolumens (UV) wenigstens eine Zusatzinformation, insbesondere eine Information über eine Materialdichte eines Objektes (O), ausgewertet wird.

5. Verfahren nach einem der vorangegangenen Ansprüche, **dadurch gekennzeichnet, dass** für die Auswertungen der zweidimensionalen Überprüfungsbilder (UB1, UB2) identische neuronale Netzwerke (NN), insbesondere das gleiche neuronale Netzwerk, verwendet wird.

6. Verfahren nach einem der vorangegangenen Ansprüche, **dadurch gekennzeichnet, dass** als zweidimensionale Überprüfungsbilder (UB1, UB2) Material-Luminiszenz-Bilder erzeugt werden.

7. Verfahren nach einem der vorangegangenen Ansprüche, **dadurch gekennzeichnet, dass** die Ausrichtung der ersten Projektionsrichtung (PR1) und/oder der zweiten Projektionsrichtung (PR2) einstellbar ist, und/oder die Anzahl der Erzeugung der zweiten zweidimensionalen Überprüfungsbilder (UB2) einstellbar ist.

8. Verfahren nach einem der vorangegangenen Ansprüche, **dadurch gekennzeichnet, dass** die Schritte des Erzeugens der zweidimensionalen Überprüfungsbilder (UB1, UB2) und der Auswertung der erzeugten zweidimensionalen Überprüfungsbilder (UB1, UB2) wenigstens einmal wiederholt werden, wobei wenigstens eine der Projektionsrichtungen (PR1, PR2) für die Wiederholung verändert wird,
wobei bevorzugt ein Zusammenhang zwischen den Ergebnissen der Auswertungen und der durchgeführten Veränderung der wenigstens einen Projektionsrichtung (PR1, PR2) für zukünftige Auswertungen und/oder Veränderungen gespeichert wird.

9. Verfahren nach einem der vorangegangenen Ansprüche, **dadurch gekennzeichnet, dass** das dreidimensionale Überprüfungsvolumen (UV) scheibenweise aufgebaut wird.

10. Verfahren nach einem der vorangegangenen Ansprüche, **dadurch gekennzeichnet, dass** bei der Erzeugung des dreidimensionalen Überprüfungsvolumens (UV), insbesondere auf Basis einer Vielzahl von zweidimensionalen Überprüfungsaufnahmen (UA), die Erzeugung mit wenigstens zwei verschiedenen Energieniveaus durchgeführt wird.

11. Verfahren nach einem der vorangegangenen Ansprüche, **dadurch gekennzeichnet, dass** als Ergebnis ein Alarm ausgegeben wird, wenn wenigstens ein verbotenes oder als gefährlich definiertes Alarmobjekt als Objekt (O) erkannt worden ist.

12. Kontrollvorrichtung (10) für die Durchführung eines Verfahrens mit den Merkmalen eines der Ansprüche 1 bis 11, aufweisend
ein Volumen-Erzeugungsmodul (20) zum Erzeugen eines dreidimensionalen Überprüfungsvolumens (UV), welches eine Vielzahl von Voxel mit Informationen zu einem Gepäckstück (G) und darin befindlichen Objekten (O) aufweist,
ein Bild-Erzeugungsmodul (30) zum Erzeugen eines zweidimensionalen ersten Überprüfungsbildes (UB1) aus dem dreidimensionalen Überprüfungsvolumen (UV) entlang einer ersten Projektionsrichtung (PR1) und zum Erzeugen wenigstens eines zweidimensionalen zweiten Überprüfungsbildes (UB2) aus dem dreidimensionalen Überprüfungsvolumen (UV) entlang einer zweiten Projektionsrichtung (PR2), welche sich von der ersten Projektionsrichtung (PR1) unterscheidet, weiter aufweisend
ein Auswertemodul (40) zum Auswerten des ersten Überprüfungsbildes (UB1) zur Erkennung von Objekten (O) mittels eines neuronalen Netzwerks (NN) und zum Auswerten des wenigstens einen zweiten Überprüfungsbildes (UB2) zur Erkennung von Objekten (O) mittels eines neuronalen Netzwerks (NN), sowie
ein Ausgabemodul (50) zum Ausgeben des Ergebnisses der Auswertungsschritte.

13. Kontrollvorrichtung (10) nach Anspruch 12, **dadurch gekennzeichnet, dass** das Volumen-Erzeugungsmodul (20), das Bild-Erzeugungsmodul (30), das Auswertemodul (40) und/oder das Ausgabemodul (50) für die Durchführung eines Verfahrens mit den Merkmalen eines der Ansprüche 1 bis 11 ausgebildet sind.

14. Kontrollvorrichtung (10) nach Anspruch 12 oder 13, **dadurch gekennzeichnet, dass** ein Erfassungsmodul (60) zum Erfassen von Eingangsdaten, insbesondere in Form von zweidimensionalen Überprüfungsaufnahmen (UA), vorgesehen ist.

15. Computerprogrammprodukt umfassend Befehle, die bei der Ausführung des Programms durch einen Computer diesen veranlassen die Schritte eines Verfahrens mit den Merkmalen eines der Ansprüche 1 bis 11 durchzuführen.

## Claims

1. Method for checking items of luggage (G) in order to detect objects (O), comprising the following steps:
- generating a three-dimensional inspection volume (UV) which comprises a large number of voxels with information about an item of luggage (G) and objects (O) inside it,
- generating a two-dimensional first inspection image (UB1) from the three-dimensional inspection volume (UV) along a first projection direction (PR1),
- generating at least one two-dimensional second inspection image (UB2) from the three-dimensional inspection volume (UV) along a second projection direction (PR2) which differs from the first projection direction (PR1),
- evaluating the first inspection image (UB1) in order to detect objects (O) by means of a neural network (NN),
- evaluating the at least one second inspection image (UB) in order to detect objects (O) by means of a neural network (NN),
- outputting the result of the evaluation steps.

2. Method according to claim 1, **characterised in that** the three-dimensional inspection volume (UV) is generated on the basis of a plurality of two-dimensional inspection scans (UA).

3. Method according to one of the preceding claims, **characterised in that** the result of the evaluation of the first inspection image (UB1) and the result of the evaluation of the second inspection image (UB2) are combined to form a combined inspection result (UE).

4. Method according to one of the preceding claims, **characterised in that** at least one additional piece of information, in particular information about a material density of an object (O), is evaluated on the basis of the three-dimensional inspection volume (UV).

5. Method according to one of the preceding claims, **characterised in that** identical neural networks (NN), in particular the same neural network, are used for the evaluations of the two-dimensional inspection images (UB1, UB2).

6. Method according to one of the preceding claims, **characterised in that** material luminescence images are generated as two-dimensional inspection images (UB1, UB2).

7. Method according to one of the preceding claims, **characterised in that** the orientation of the first projection direction (PR1) and/or the second projection direction (PR2) is adjustable and/or
the number of second two-dimensional inspection images (UB2) generated is adjustable.

8. Method according to one of the preceding claims, **characterised in that** the steps of generating the two-dimensional inspection images (UB1, UB2) and evaluating the generated two-dimensional inspection images (UB1, UB2) are repeated at least once, wherein at least one of the projection directions (PR1, PR2) is changed for the repetition,
wherein preferably a correlation between the results of the evaluation and the change in the at least one projection direction (PR1, PR2) carried out is stored for future evaluations and/or changes.

9. Method according to one of the preceding claims, **characterised in that** the three-dimensional inspection volume (UV) is built up section by section.

10. Method according to one of the preceding claims, **characterised in that**, when generating the three-dimensional inspection volume (UV), in particular on the basis of a plurality of two-dimensional inspection scans (UA), the generation is carried out with at least two different energy levels.

11. Method according to one of the preceding claims, **characterised in that** an alarm is issued as a result if at least one alarm object which is prohibited or defined as dangerous has been detected as an object (O).

12. Control device (10) for carrying out a method having the features of one of the claims 1 to 11, comprising
a volume generation module (20) for generating a three-dimensional inspection volume (UV) which comprises a large number of voxels with information about an item of luggage (G) and objects (O) inside it,
an image generation module (30) for generating a two-dimensional first inspection image (UB1) from the three-dimensional inspection volume (UV) along a first projection direction (PR1) and for generating at least one two-dimensional second inspection image (UB2) from the three-dimensional inspection volume (UV) along a second projection direction (PR2) which differs from the first projection direction (PR1), further comprising
an evaluation module (40) for evaluating the first inspection image (UB1) in order to detect objects (O) by means of a neural network (NN) and for evaluating the at least one second inspection image (UB2) in order to detect objects (O) by means of a neural network (NN) and
an output module (50) for outputting the result of the evaluation steps.

13. Control device (10) according to claim 12, **characterised in that** the volume generation module (20), the image generation module (30), the evaluation module (40) and/or the output module (50) are designed to carry out a method having the features of one of the claims 1 to 11.

14. Control device (10) according to claim 12 or 13, **characterised in that** a scanning module (60) is provided for the acquisition of input data, in particular in the form of two-dimensional inspection scans (UA).

15. Computer program product comprising commands which, when the program is run by a computer, cause it to carry out the steps of a method having the features of one of the claims 1 to 11.

## Revendications

1. Procédé permettant d'inspecter des bagages (G) afin de détecter des objets (O), comprenant les étapes suivantes :
- Génération d'un volume d'inspection tridimensionnel (UV) comprenant une pluralité de voxels contenant des informations sur un bagage (G) et les objets (O) qu'il contient,
- Génération d'une première image d'inspection bidimensionnelle (UB1) à partir du volume d'inspection tridimensionnel (UV) le long d'une première direction de projection (PR1),
- Génération d'au moins une deuxième image d'inspection bidimensionnelle (UB2) à partir du volume d'inspection tridimensionnel (UV) le long d'une deuxième direction de projection (PR2) qui diffère de la première direction de projection (PR1),
- Analyse de la première image d'inspection (UB1) afin de détecter des objets (O) à l'aide d'un réseau neuronal (NN),
- Analyse d'au moins une deuxième image d'inspection (UB) afin de détecter des objets (O) à l'aide d'un réseau neuronal (NN),
- Affichage du résultat des étapes d'analyse.

2. Procédé selon la revendication 1, **caractérisé en ce que** le volume d'inspection tridimensionnel (UV) est généré à partir d'une pluralité d'enregistrements d'inspection bidimensionnels (UA).

3. Procédé selon l'une des revendications précédentes, **caractérisé en ce que** le résultat de l'analyse de la première image d'inspection (UB1) et le résultat de l'analyse de la deuxième image d'inspection (UB2) sont combinés pour former un résultat d'inspection commun (UE).

4. Procédé selon l'une des revendications précédentes, **caractérisé en ce qu'**au moins une information supplémentaire, notamment une information relative à la densité de matériau d'un objet (O), est analysée à partir du volume d'inspection tridimensionnel (UV).

5. Procédé selon l'une des revendications précédentes, **caractérisé en ce que** des réseaux neuronaux (NN) identiques, en particulier le même réseau neuronal, sont utilisés pour l'analyse des images d'inspection bidimensionnelles (UB1, UB2).

6. Procédé selon l'une des revendications précédentes, **caractérisé en ce que** des images de luminescence du matériau sont générées sous forme d'images d'inspection bidimensionnelles (UB1, UB2).

7. Procédé selon l'une des revendications précédentes, **caractérisé en ce que** l'orientation de la première direction de projection (PR 1) et/ou de la deuxième direction de projection (PR 2) est réglable, et/ou
le nombre de génération des deuxièmes images d'inspection bidimensionnelles (UB2) est réglable.

8. Procédé selon l'une des revendications précédentes, **caractérisé en ce que** les étapes consistant à générer les images d'inspection bidimensionnelles (UB1, UB2) et à analyser les images d'inspection bidimensionnelles générées (UB1, UB2) sont répétées au moins une fois, au moins l'une des directions de projection (PR1, PR2) étant modifiée pour la répétition,
un lien entre les résultats des évaluations et la modification effectuée de ladite au moins une direction de projection (PR1, PR2) étant de préférence enregistré pour de futures évaluations et/ou modifications.

9. Procédé selon l'une des revendications précédentes, **caractérisé en ce que** le volume d'inspection tridimensionnel (UV) est constitué par tranches.

10. Procédé selon l'une des revendications précédentes, **caractérisé en ce que,** lors de la génération du volume d'inspection tridimensionnel (UV), notamment à partir d'une pluralité d'enregistrements d'inspection bidimensionnels (UA), la génération est effectuée avec au moins deux niveaux d'énergie différents.

11. Procédé selon l'une des revendications précédentes, **caractérisé en ce qu'**il en résulte l'émission d'une alarme lorsqu'au moins un objet d'alarme interdit ou défini comme dangereux a été détecté en tant qu'objet (O).

12. Dispositif de contrôle (10) destiné à la mise en œuvre d'un procédé présentant les caractéristiques de l'une des revendications 1 à 11, comprenant
un module de génération de volume (20) destiné à générer un volume d'inspection tridimensionnel (UV) qui comprend une pluralité de voxels contenant des informations relatives à un bagage (G) et aux objets (O) qu'il contient,
un module de génération d'images (30) destiné à générer une première image d'inspection bidimensionnelle (UB1) à partir du volume d'inspection tridimensionnel (UV) le long d'une première direction de projection (PR1) et destiné à générer au moins une deuxième image d'inspection bidimensionnelle (UB2) à partir du volume d'inspection tridimensionnel (UV) le long d'une deuxième direction de projection (PR2) qui diffère de la première direction de projection (PR1), comprenant en outre
un module d'analyse (40) destiné à analyser la première image d'inspection (UB1) afin de détecter des objets (O) à l'aide d'un réseau neuronal (NN) et d'analyser l'au moins une deuxième image d'inspection (UB2) afin de détecter des objets (O) à l'aide d'un réseau neuronal (NN), ainsi que
un module de sortie (50) destiné à fournir le résultat des étapes d'analyse.

13. Dispositif de contrôle (10) selon la revendication 12, **caractérisé en ce que** le module de génération de volume (20), le module de génération d'images (30), le module d'analyse (40) et/ou le module de sortie (50) sont conçus pour mettre en œuvre un procédé présentant les caractéristiques de l'une des revendications 1 à 11.

14. Dispositif de contrôle (10) selon la revendication 12 ou 13, **caractérisé en ce qu'**il est prévu un module de saisie (60) destiné à saisir des données d'entrée, notamment sous la forme d'enregistrements d'inspection bidimensionnels (UA).

15. Produit logiciel comprenant des instructions qui, lorsqu'elles sont exécutées par un ordinateur, amènent celui-ci à mettre en œuvre les étapes d'un procédé présentant les caractéristiques de l'une des revendications 1 à 11.
